Europäisches Patentamt
European Patent Office
Office européen des brevets

(19)

(11) Publication number: **0 336 296**
**A2**

(12) **EUROPEAN PATENT APPLICATION**

(21) Application number: 89105618.6

(22) Date of filing: 30.03.89

(51) Int. Cl.[4]: C08L 13/00 , C08L 91/00

(30) Priority: 04.04.88 JP 81221/88

(43) Date of publication of application: 11.10.89 Bulletin 89/41

(84) Designated Contracting States: DE FR GB IT

(71) Applicant: NIPPON OIL CO. LTD.
3-12, Nishi Shinbashi 1-chome
Minato-ku Tokyo(JP)

(72) Inventor: Amano, Hisao
35-1, Ohkubo 3-chome Kohnan-ku
Yokohama-shi Kanagawa-ken(JP)
Inventor: Otsuki, Yutaka
332-4, Noba-cho Kohnan-ku
Yokohama-shi Kanagawa-ken(JP)
Inventor: Ohshima, Akio
20-17, Rokkakubashi 6-chome Kanagawa-ku
Yokohama-shi Kanagawa-ken(JP)

(74) Representative: Kraus, Walter, Dr. et al
Patentanwälte Kraus, Weisert & Partner
Thomas-Wimmer-Ring 15
D-8000 München 22(DE)

# (54) Room temperature curing resin compound.

(57) A room temperature curing resin compound that can be used as a potting material, which comprises
(A) an organic polymer comprising a main chain polymeric portion (a) having a molecular weight of 300 to 30,000 and having carbon-carbon double bonds of an iodine value of 50 to 500 and an acid group (b) linked to the main chain polymeric portion, the acid group being of a general formula

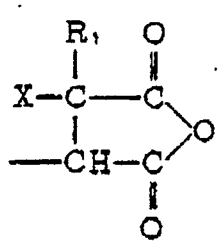

and being contained in a ratio of 0.05 to 0.5 mole per 100 g of component (A),
(B) a polyol having at least two hydroxyl groups in one molecule, and
(C) a curing promoter,
the ratio of the acid group (b) of component (A) and the hydroxyl group of (B) being 0.5 to 1.5, with or without the addition of a plasticizer.

EP 0 336 296 A2

# Room temperature curing resin compound

## Field of the Invention

This invention relates to a room temperature curing resin compound, more specifically to a two-component potting material which is superior in electrical properties, temperature cycle resistance, potting adaptability, and water resistance.

## Background of the Invention

Heretofore, resin casting (potting) has been used in the manufacture of various electric and electronic parts and joint units such as coils, capacitors, and transformers.

Resin potting is made for electrical insulation, fixing, and protection of electronic parts and, therefore, use of a potting resin is required which has improved electrical characteristics, temperature cycle resistance, potting adaptability, and water resistance. Furthermore, since stress must be avoided to such electronic parts as inductors and selenium rectifiers, it is required that the potting resin is small in heat evolution and shrinkage during curing and has sufficient absorption capabilities (flexilibity) to external shocks. For potting of parts which tend to degrade by heating or are difficult to be heated, room temperature curing is required. In the past, silicone resins, epoxy resins, and urethane resins have been used as potting resins for this purpose. Silicone resins are superior in terms of electrical properties, moisture resistance, and flexilibity, but are inferior in adhesive properties, and expensive. Epoxy resins are superior in adhesive properties, but inferior in flexilibity, and normally are difficult to cure at room temperature. Urethane resins are curable at room temperature and have improved flexibility, but have problems in workability with their components, polyisocyanate compounds, which have toxicity and strong odors, and tend to react with moisture in the air to decompose.

With a view to overcome the above problems, it is a primary object of the present invention to provide a two-component potting material which is curable at room temperature, has a low viscosity, is superior in electrical properties, temperature cycle resistance, water resistance, flexibility, and adhesive properties, is low in toxicity, and has improved workability.

## Summary of the Invention

To attain the above object, the inventors of the present invention have conducted intensive research, and found that a room temperature curing resin compound comprising

(A) an organic polymer comprising a main chain polymeric portion (a) having a molecular weight of 300 to 30,000 and having carbon-carbon double bonds of an iodine value of 50 to 500 and an acid group (b) linked to the main chain polymeric portion through a carbon-carbon bond, the acid group being of a general formula

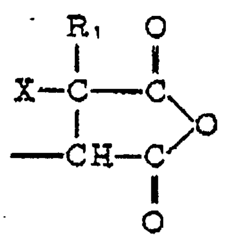

(where $R_1$ denotes a hydrogen atom, a halogen atom, or an organic radical having 1-3 carbon atoms; and X denotes a hydrogen atom or a bond and, when X is a bond, the carbon atom bonded with $R_1$ and the adjacent carbon atom having a hydrogen atom can be part of the main chain), the acid group being contained in a ratio of 0.05 mole to 0.5 mole per 100 g of component (A),

(B) a polyol having at least two hydroxyl groups in one molecule,

(C) with or without the addition of a plasticizer, and

(D) a curing promoter,
the ratio of the acid group (b) of component (A) and the hydroxyl group of (B) being 0.5 to 1.5 is a good potting material which can be cured at room temperature, is low in viscosity, and is superior in electrical properties, temperature cycle resistance, water resistance, flexibility, and adhesive properties, is low in toxicity, and has good workability, thus achieving the present invention.

## Detailed Description of the Invention

The main chain polymeric portion (a) of the resin (A) used in the present invention is a polymeric compound with a number average molecular weight (hereinafter simply referred to as "molecular weight") of 300 to 30,000 having carbon-carbon double bonds of an iodine value of 50 to 500, preferably of 100 to 470.

The polymeric compound includes natural oils such as linseed oil, paulownia oil, soybean oil, and dehydrated castor oil, or so-called stand oils which are produced by heat treating these natural oils to increase molecular weights, low-molecular-weight polymers of conjugated diolefins such as butadiene, isoprene, and piperylene, low-molecular-weight copolymers of two or more of these conjugated diolefins, and low-molecular-weight copolymers of one or more of these conjugated diolefins and a vinyl monomer having ethylenic unsaturated group or groups: particularly, such an aliphatic or aromatic vinyl monomer as isobutylene, diisobutylene, styrene, α-methyl styrene, vinyl toluene, or divinyl benzene. A mixture of two or more substances selected from the above group can also be used. These low-molecular-weight polymers are produced by a conventional method known in the art. A typical production method is that, using an alkali metal or an organic alkali metal compound as a catalyst, a conjugated diolefin having 4 to 5 carbon atoms alone, or two or more of these diolefins, or preferably with an aromatic vinyl monomer in an amount of 50 mole % or less to the conjugated diolefin(s), such as styrene, α-methyl styrene, vinyl toluene, or divinyl benzene, are anionically polymerized at a temperature of 0 to 100 °C. Preferable production methods to obtain a light-colored low-molecular-weight polymer with a controlled molecular weight and reduced gel materials include a chain transfer polymerization method (U.S. Patent No.3,789,090), which uses an organic alkali metal compound such as benzylsodium as a catalyst and a compound having an alkyl-aryl group such as toluene as a chain transfer agent, a living polymerization method (Japanese Patent Publication No.42-17485/1967, No.43-27432/1968), which uses a polycyclic aromatic compound such as naphthalene as an activator in tetrahydrofuran solvent and an alkali metal such as sodium as a catalyst, and a polymerization method (Japanese Patent Publication No-32-7446/1967, No.33-1245/1968, No.34-10188/1969), which uses an aromatic hydrocarbon such as toluene or xylene and a dispersion of a metal such as sodium as a catalyst, with the addition of an ether such as dioxane to control the molecular weight. A low-molecular-weight polymer produced by a coordinate anionic polymerization method (Japanese Patent Publication No.45-507/1970, No.46-30300/1971), which uses an acetylacetonate compound of a Group-XIII metal such as cobalt or nickel and an alkylaluminum halogenide as catalysts, can also be used. Furthermore, a so-called petroleum resin having unsaturated groups, which is produced from a petroleum cracking fraction of 4-10 carbon atoms by a cationic polymerization method using a Friedel-Crafts catalyst such as aluminum chloride, boron trifluoride, or a complex thereof at a temperature of 0 to 100 °C, or a low-molecular-weight butadiene-isoprene copolymer produced using the same catalyst can also be used as the main chain portion of the resin used in the present invention.

The natural oils and the low-molecular-weight polymers or copolymers of conjugated diolefins have a molecular weight in the range of 300 to 30,000, preferably 500 to 5,000. If the molecular weight exceeds 30,000, the polymer is too viscous and low in fluidity, and if the molecular weight is smaller than 300, the cured compound is low in strength and unusable in practical applications. The natural oils and the low-molecular-weight conjugated diolefin polymers of copolymers have an iodine value of 50 to 500, preferably 100 to 470. If the iodine value is smaller than 50, it is difficult to introduce the acid group (b), and if the iodine value is greater than 500, the polymer is inferior in storage stability and is practically unusable.

The iodine value defined in the present invention is determined by placing about 0.1 g of a sample in a 500-ml iodine value measuring flask, adding 100 ml of chloroform and 100 g of p-dichlorobenzene to dissolve the sample, adding 60 ml of a 0.1N solution of monochloroiodine in carbon tetrachloride and reacting the solution for 1 hour at room temperature under stirring, then adding 10 ml of a 10% potassium iodide aqueous solution and stirring for 5 minutes, and titrating with a 0.1N sodium thiosulfate aqueous solution using starch as an indicator (A. Kemp and H. Peters, Ind. Eng. Chem. Anal. Ed,15453(1973)).

The natural oil or the low-molecular-weight conjugated diolefin polymer or copolymer can be introduced with an acid group (b) represented by a general formula

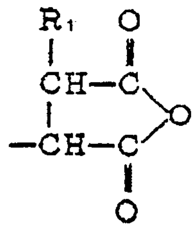 or 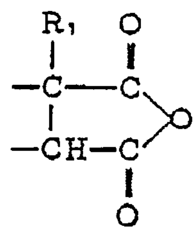

(where $R_1$ denotes a hydrogen atom or an organic radical having 1-3 carbon atoms) by a prior art method (Japanese Patent Publication No.46-11195/1971) using an addition reaction with maleic acid, maleic anhydride, citraconic acid, or citraconic anhydride carried out at a temperature of about 100 to 300 °C. Also, a method (West German Patent Publication Laid-open 2,362,534) in which the addition reaction is carried out in the presence of phenylene diamines, pyrogallols, or naphthols in the reaction medium to prevent occurrence of a gelation reaction is preferably employed. Two or more of the natural oils and/or the low-molecular-weight conjugated diolefin polymers or copolymers can be first mixed, and then introduced with the acid groups, or the natural oils and/or the low-molecular-weight polymers and copolymers can be mixed after introducing the acid groups. However, when the acid group addition rates are much different, it is preferable to first introduce the acid group and then mix the polymers.

In addition to the above methods to introduce the acid group (b) after the main chain portion is obtained, the organic polymer component (A) can also be produced by a one-step method. Cyclopentadiene or dicyclopendadiene and maleic anhydride or the like can be thermally polymerized at a temperature of 150 to 300 °C to yield the organic polymer component (A) (U.S. Patent No.2,608,550).

The amount of the acid group (b) represented by a general formula

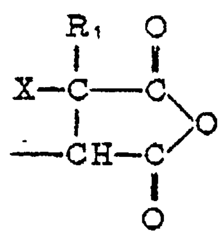

is in the range from 0.05 to 0.5 mole, preferably from 0.1 to 0.25 mole, per 100 g of component (A). If the amount of the acid group (b) is less than 0.05 mole per 100 g of the resin, the cured resin is low in strength and, if more than 0.5 mole, the resin compound is too viscous and practically unusable.

The polyol having at least two hydroxyl groups in the molecule as component (B) of the present invention is an organic compound normally having 2 to 500 carbon atoms, preferably 3 to 200 carbon atoms. Such as polyol can be, for example, polybutadiene-polyol (tradename: Poly-bd R-45-HT, of Idemitsu Petrochemical; tradename: Nisso Pb G-2000, of Nippon Soda; tradename: Butarez HTL Polymers, of Phillips 66 Co.), polyolefin-polyol (tradename: Polytel HA, H, of Mitsubishi Chemical Industries), polyisobutylene-diol (tradename: PIB Diol, of Akron Cationic Polymer Dev. Co.), modified liquid polyisoprene rubber (tradename: Kuraprene LIR-503, 506, of Kuraray), castor oil, polypropylene glycol; polyester-polyol, acrylic polyol, trimethylolpropane, and glycerine.

The amount of the polyol is such that the molar ratio of the acid group (b) of component (A) and the hydroxyl group of component (B) is 0.5 to 1.5, preferably 0.8 to 1.2. If the molar ratio is out of this range, the cured resin is low in strength and is not desirable.

The plasticizer as component (D) of the present invention may be added or may be omitted. When used, the plasticizer is a relatively low-molecular-weight, low-viscosity compound having a boiling point of 250 °C or higher, which can be selected from, for example, high-boiling aromatic hydrocarbons (tradename: Hisol SAS-296, Condenser Oil S, of Nippon Petrochemicals), dioctyl phthalate, dimethyl phthalate, diethyl phthalate, dibutyl phthalate, process oil, and asphalt. When the plasticizer is used, it is normally added in an amount of 80 parts by weight or less, preferably 1 to 50 parts by weight, to 100 parts by weight of the total compound. If component (D) is excessive, the strength will decrease. If component (D) is not added or small in amount, the resulting resin compound gives a higher strength but tends to be inferior in moldability.

The curing promoter as component (C) of the present invention can be selected from compounds which

are commonly used as esterification catalysts, such as tertiary amines, imidazoles, and trialkylphosphines. Specifically, examples of these substances include triethylamine, tributylamine, dimethylbenzylamine, N,N-dimethylethanolamine, 2-ethyl-4-methylimidazole, 2-methylimidazole, 2-ethylimidazole, 2,4-dimethylimidazole, 2-undecylimidazole, 2-heptadecylimidazole, 1-vinyl-2-methylimidazole, 2-isopropylimidazole, 1-propyl-2-methylimidazole, 1-cyanomethyl-2-methylimidazole, 1-cyanoethyl-2-ethyl-4-methylimidazole, 1-cyanoethyl-2-undecylimidazole, 1-cyanoethyl-2-phenylimidazole, 2-phenylimidazole, 1-benzyl-2-methylimidazole, 2-phenyl-4-methylimidazole, 2-phenyl-4,5-dihydroxymethylimidazole, 2-phenyl-4-methyl-5-hydroxymethylimidazole, and triphenylphosphine.

Component (C) is preferably used in an amount of 0.05 to 5 parts by weight per 100 parts by weight of the entire compound. The compound according to the present invention can further be mixed with fillers such as talc, and/or halogen-based, phosphorus-based, or inorganic fire-retardant agents such as tricresylphosphate or phosphorus. In addition to use in electrical applications, the compound according to the present invention can also be used in acoustic materials, vibration-proof materials, various sealants, and surface coating materials which can effectively prevent degradation due to salt, mechanical damages, wind and rain.

The present invention will now be described further in detail with reference to the examples.

Synthesis Example 1

1,000 g of Polybutadiene B-1000 (manufactured by Nippon Petrochemicals Co., Ltd.) which has 58% of 1,2-bond and a number average molecular weight of 1,000, and an Antigene 6C solution containing 163 g of maleic anhydride and 2 g of Antigene 6C (manufactured by Sumitomo Chemical Co., Ltd.) as a gelation prevention agent previously dissolved in 10 g of xylene were placed in a 2-liter separable flask with a reflux cooler, and maleinization reaction was carried out for 5 hours at 195 °C under a nitrogen flow. After the reaction, the result was subjected to nitrogen bubbling and xylene was removed to obtain maleinized polybutadiene (A-1). The thus obtained A-1 had an acid value of 80 mg KOH/g.

Synthesis Example 2

1,000 g of Polybutadiene B-2000 (manufactured by Nippon Petrochemicals Co., Ltd.) which has 65% of 1,2-bond and a number average molecular weight of 2,000, and an Antigene 6C solution containing 163 g of maleic anhydride and 2 g of Antigene 6C (manufactured by Sumitomo Chemical Co., Ltd.) as a gelation prevention agent previously dissolved in 10 g of xylene were placed in a 2-liter separable flask with a reflux cooler, and maleinization reaction was carried out for 5 hours at 195 °C under a nitrogen flow. After the reaction, the result was subjected to nitrogen bubbling and xylene was removed to obtain maleinized polybutadiene (A-2). The thus obtained A-2 had an acid value of 80 mg KOH/g.

Synthesis Example 3

1,000 g of linseed oil (iodine value: 175 mg KOH/g) and an Antigene 6C solution containing 163 g of maleic anhydride and 2 g of Antigene 6C (manufactured by Sumitomo Chemical Co., Ltd.) as a gelation prevention agent previously dissolved in 10 g of xylene were placed in a 2-liter separable flask with a reflux cooler, and maleinization reaction was carried out for 5 hours at 195 °C under a nitrogen flow. After the reaction, the result was subjected to nitrogen bubbling and xylene was removed to obtain maleinized linseed oil (A-3). The thus obtained A-3 had an acid value of 80 mg KOH/g.

Example 1

100 g of the maleinized polybutadiene prepared as component (A-1) in Synthesis Example 1, 177 g of polybutadiene polyol (Poly-bd R-45HT, of Idemitsu Petrochemical, containing 45.2 mg KOH/g of hydroxyl group) as component (B-1) (acid group/hydroxyl group = 1.0), and 2 g of 2-ethyl-4-methylimidazole (hereinafter referred to as 2E4MZ) as component (C) were mixed under stirring to obtain a compound according to the present invention. The formulation and properties of the cured resin are shown in Table 1.

Example 2

100 g of the maleinization polybutadiene prepared as component (A-1) in Synthesis Example 1 and 140 g of high-boiling aromatic hydrocarbon Hisol SAS-296 (Nippon Petrochemicals) as a plasticizer of component (D-1) were mixed under stirring to prepare solution I. 177 g of polybutadiene polyol Poly-bd R-45HT (B-1), 61 of Hisol SAS-296 (D-1), and 2 g of 2E4MZ (C) were mixed under stirring to prepare solution II. Equal amounts (by weight) of solution I and solution II were mixed to obtain a compound according to the present invention. The formulation and properties of the cured resin are shown in Table 1.

Example 3

100 g of the maleinized polybutadiene prepared as component (A-1) in Synthesis Example 1 and 240 g of Hisol SAS-296 (D-1) were mixed under stirring to prepare solution I. 177 g of polybutadiene polyol Poly-bd R-45HT (B-1), 161 of Hisol SAS-296 (D-1), and 2 g of 2E4MZ (C) were mixed under stirring to prepare solution II. Equal amounts (by weight) of solution I and solution II were mixed to obtain a compound according to the present invention. The formulation and properties of the cured resin are shown in Table 1.

Example 4

100 g of the maleinizied polybutadiene prepared as component (A-2) in Synthesis Example 2 and 176 g of dioctyl phthalate as a plasticizer of component (D-2) were mixed under stirring to prepare solution I. 50 g of castor oil (hydroxyl group content: 160 mg KOH/g) as component (B-2), 222 g of dioctyl phthalate (D-2), and 4 g of 2E4MZ (C) were mixed under stirring to prepare solution II. Equal amounts (by weight) of solution I and solution II were mixed to obtain a compound according to the present invention. The formulation and properties of the cured resin are shown in Table 1.

Example 5

100 g of the malenizied linseed oil prepared as component (A-3) in Synthesis Example 3 and 240 g of process oil Comorex 200 (Nippon Oil Co.) as a plasticizer of component (D-3) were mixed under stirring to prepare solution I. 215 g of polyoxypropyleneglycol (hydroxyl group content: 37.3 mg KOH/g) as component (B-3) having a molecular weight of 3,000, 123 g of Comorex (D-3), and 2 g of 2E4MZ (D) were mixed under stirring to prepare solution II. Equal amounts (by weight) of solution I and solution II were mixed to obtain a compound according to the present invention. The formulation and properties of the cured resin are shown in Table 1.

Table 1

| | EX 1 | EX 2 | EX 3 | EX 4 | EX 5 |
|---|---|---|---|---|---|
| **Solution I** | | | | | |
| Component (A) (g) | A-1 100 | A-1 100 | A-1 100 | A-2 100 | A-3 100 |
| Component (D) (g) | | D-1 140 | D-1 240 | D-2 176 | D-3 240 |
| Viscosity at 25°C (cps) (Note 1) | 104,000 | 260 | 80 | 2,510 | 10,750 |
| Storage stability: occurrence of phase separation | None | None | None | None | None |
| **Solution II** | | | | | |
| Component (B) (g) | B-1 177 | B-1 177 | B-1 177 | B-2 50 | B-3 215 |
| Component (D) (g) | | D-1 61 | D-1 161 | D-2 222 | D-3 123 |
| Component (C) (g) | 2E4MZ 2 | 2E4MZ 2 | 2E4MZ 2 | 2E4MZ 2 | 2E4MZ 2 |
| Viscosity at 25°C (cps) (Note 1) | 6,350 | 1,740 | 690 | 100 | 720 |
| Storage stability: occurrence of phase separation | None | None | None | None | None |
| Mixing ratio of solutions I and II (weight ratio) | | 1:1 | 1:1 | 1:1 | 1:1 |
| Acid group/hydroxyl group (molar ratio) | 1.0 | 1.0 | 1.0 | 1.0 | 1.0 |
| Time to lose fluidity (h/25°C) | 4-5 | 4-5 | 4-5 | 4-5 | 4-5 |
| **Properties of cured resin** | | | | | |
| Tensile strength ($kg/cm^2$) (Note 3) | 5.4 | 2.6 | 0.5 | 1.2 | 0.8 |
| Elongation (%) (Note 3) | 175 | 200 | 220 | 100 | 180 |
| Tear strength (kg/cm ) (Note 3) | 2.2 | 1.2 | 0.2 | 0.2 | 0.5 |
| Needle penetration hardness (Note 4) | 30 | 52 | 89 | 75 | 80 |
| Volume resistivity (ohm.cm) (Note 5) | $0.8 \times 10^{14}$ | $1.2 \times 10^{14}$ | $1.0 \times 10^{14}$ | $0.5 \times 10^{14}$ | $0.6 \times 10^{14}$ |
| Temperature cycle resistance (Note 6) | Good | Good | Good | Good | Good |

Note 1: Measured by means of a Brookfield type viscometer

Note 2: After aging of 7 days at 25°C

Note 3: Tensile strength, elongation, and tear strength measured according to JIS-K6301

Note 4: Needle penetration hardness measured according to JIS-K2207

Note 5: Volume resistivity measured according to JIS-K6911

Note 6: Temperature cycle test at -40°C for 1 hour in a low-temperature vessel and at 100°C for 1 hour in a hot air circulation-type dryer; Evaluation: Good: over 50 cycles, Fair: 10-50 cycles, Poor: less than 10 cycles

As can be seen from the above examples, each component of the resin compound according to the present invention has good storage stability, and these components can be mixed to obtain an excellent two-component potting material which cures at room temperature, and the cured resin is superior in mechanical properties and high in electrical resistivity.

## Claims

1. A room temperature curing resin compound comprising (A) an organic polymer comprising a main chain polymeric portion (a) having a molecular weight of 300 to 30,000 and having carbon-carbon double bonds of an iodine value of 50 to 500 and an acid group (b) linked to said main chain polymeric portion through a carbon-carbon bond, said acid group being of a general formula

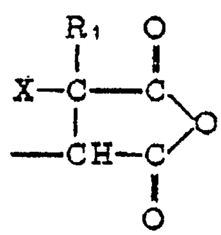

(where $R_1$ denotes a hydrogen atom, a halogen atom, or an organic radical having 1 to 3 carbon atoms; and X denotes a hydrogen atom or a bond and, when X is a bond, the carbon atom bonded with $R_1$ and the adjacent carbon atom having a hydrogen atom can be part of said main chain), said acid group being contained in a ratio of 0.05 mole to 0.5 mole per 100 g of said component (A),
(B) a polyol having at least two hydroxyl groups in one molecule, and
(C) a curing promoter,
ratio of said acid group (b) of said component (A) and said hydroxyl group of said component (B) being 0.5 to 1.5.

2. A room temperature curing resin compound comprising
(A) an organic polymer comprising a main chain polymeric portion (a) having a molecular weight of 300 to 30,000 and having carbon-carbon double bonds of an iodine value of 50 to 500 and an acid group (b) linked to said main chain polymeric portion through a carbon-carbon bond, said acid group being of a general formula

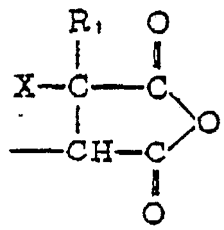

(where $R_1$ denotes a hydrogen atom, a halogen atom, or an organic radical having 1 to 3 carbon atoms; and X denotes a hydrogen atom or a bond and, when X is a bond, the carbon atom bonded with $R_1$ and the adjacent carbon atom having a hydrogen atom can be part of said main chain), said acid group being contained in a ratio of 0.05 mole to 0.5 mole per 100 g of said component (A),
(B) a polyol having at least two hydroxyl groups in one molecule,
(C) a curing promoter
(D) a plasticizer
ratio of said acid group (b) a plasticizer, of said component (A) and said hydroxyl group of said component (B) being 0.5 to 1.5.

3. The room temperature curing resin compound as claimed in Claim 1 or Claim 2, wherein said component (A) is maleinized polybutadiene.

4. The room temperature curing resin compound as claimed in Claim 1 or Claim 2, wherein said component (A) is maleinized linseed oil.

5. The room temperature curing resin compound as claimed in Claim 1 or Claim 2, wherein said component (B) is a polyol selected from the group consisting of polybutadiene-polyol, polyolefin-polyol, polyisobutylene-diol, modified liquid polyisoprene rubber, castor oil, polypropyleneglycol, polyester-polyol, polyacrylic polyol, trimethylolpropane, and glycerine.